# EUROPEAN PATENT SPECIFICATION

(11) **EP 4 453 061 B1**
(45) Date of publication and mention of the grant of the patent: **04.02.2026**
(21) Application number: 22844065.7
(22) Date of filing: 22.12.2022
(51) Int. Cl.: C08G 63/06, C08G 63/81, C08G 63/85, C08L 67/04

(54) **PROCESS FOR THE PRODUCTION OF A POLYESTER (CO)POLYMER**
VERFAHREN ZUR HERSTELLUNG EINES POLYESTER(CO)POLYMERS
PROCÉDÉ DE PRODUCTION D'UN (CO) POLYMÈRE DE POLYESTER

(30) Priority: 24.12.2021 EP 21217723
(43) Date of publication of application: 30.10.2024
(73) Proprietor: Avantium Knowledge Centre B.V., 1014 BV Amsterdam (NL)
(72) Inventor: WANG, Bing, 1014 BV Amsterdam (NL); GRUTER, Gerardus Johannes Maria, 1014 BV Amsterdam (NL); VAN PUTTEN, Robert-Jan, 1014 BV Amsterdam (NL); WEINLAND, Daniel Herbert, 1012 WX Amsterdam (NL); MURCIA, Maria Alejandra, 1012 WX Amsterdam (NL)
(74) Representative: Avantium Intellectual Property
(86) International application number: PCT/EP2022/087428
(87) International publication number: WO 2023/118409

(56) References cited:
- EP-A2- 0 591 978
- EP-B1- 2 812 372
- WO-A1-2018/127270
- US-A1- 2013 023 642
- AJIOKA M ET AL: "Aliphatic polyesters and their copolymers synthesized through direct condensation polymerization", POLYMER DEGRADATION AND STABILITY, BARKING, GB, vol. 59, no. 1-3, 3 January 1998 (1998-01-03), pages 137 - 143, XP027153147, ISSN: 0141-3910, [retrieved on 19980103]
- NEDERBERG F ET AL: "New Paradigms for Organic Catalysts: The First Organocatalytic Living Polymerization", ANGEWANDTE CHEMIE INTERNATIONAL EDITION, VERLAG CHEMIE, vol. 40, no. 14, 10 July 2001 (2001-07-10), pages 2712 - 2715, XP002638879, ISSN: 1433-7851

## Description

### FIELD OF THE INVENTION

The invention relates to a process for the production of a polyester (co)polymer, further to novel polyester (co)polymers, a composition containing a polyester (co)polymer, and an article comprising said polyester (co)polymer.

### BACKGROUND TO THE INVENTION

Poly(glycolic acid) (PGA), poly(lactic acid) (PLA) and their copolymers poly(lactide-co-glycolide) (PLGA), are linear aliphatic polyesters of great interest for the ongoing transition towards more sustainable plastic alternatives. This interest is based on their biodegradability and the fact that these polymers can be made from sustainable sources. PLA and PGA are bioresorbable and their degradation rates, physical, mechanical and other properties can be tailored by employing their copolymers or by varying molecular weights. PGA is mostly used in biomedical applications due to its biocompatibility and degradability. Although PGA exhibits outstanding barrier properties, it has high crystallinity, thermal instability and limited solubility, which hamper its processability and restrict the use of PGA for a wider range of applications (such as packaging). PLA, on the other hand, has become a popular material due to it being economically produced from renewable resources and its industrial compostability. PLA can degrade into innocuous lactic acid, so it is used as medical implants in the form of anchors, screws, plates, pins, rods, and as a mesh. PLA can also be used in other applications, such as a decomposable packaging material, either cast, injection-molded, or spun. It is useful for producing loose-fill packaging, compost bags, food packaging, and disposable tableware. In 2010, PLA had the second highest consumption volume of any bioplastic in the world, although it is still not a commodity polymer. PLA is the most widely used plastic filament material in 3D printing, but widespread application of PLA has, however, been hindered by numerous physical and processing shortcomings. Examples thereof are bad barrier properties, poor strength and limited degradability. For instance, environments without the necessary conditions will see very slow decomposition, akin to that of non-bioplastic.

When glycolic acid (GA) is copolymerized with lactic acid (LA), the material properties of the resulting copolymer can be tuned and the aforementioned issues can be circumvented to some extent. Currently these polyesters and copolyesters are commercially produced via ring opening melt polymerization (ROP) of glycolide and/or lactide, which are the cyclic dimers of glycolic acid and lactic acid, respectively. PLGA copolymers with high glycolide content (prepared via ROP) reportedly demonstrate high performance as barriers to moisture and oxygen (see Murcia Valderrama M. et al., ACS Appl. Polym. Mat. 2020, 2, 2706). This, together with their degradability and easier processability than PGA, implies potential for PLGA copolymers in, for example, the packaging industry. Although high molecular weights, relevant for e.g. favourable mechanical properties, can be achieved through this ROP synthetic strategy, the intermediary steps involved in the overall process lead to a costly production, especially considering the still high cost of glycolide compared to lactide.

Direct polycondensation of GA and/or LA monomers is considered a more cost efficient route for homopolymerization and copolymerization of these acids. Since both acids contain a hydroxyl and a carboxyl group, they can be directly converted (by esterification) into a polyester. Unfortunately, the process involves two equilibrium reactions that influence and limit the resulting molecular weight of the polymer. One reaction concerns the dehydration equilibrium for esterification and the other the ring-chain equilibrium involving depolymerization to glycolide or lactide, respectively. As the reaction proceeds and oligomers are formed, high temperatures and high vacuum are required for water removal. Under these conditions, depolymerization reactions are favored, resulting in the formation of the monomers glycolide and lactide.

Ajioka M. et al discloses in "Aliphatic polyesters and their copolymers synthesized through direct condensation polymerization" (see Polymer Degradation and Stability, vol. 59, no. 1-3, 3rd of January 1998, pages 137-143) the direct polymerization of L-lactic acid and other hydroxyacid in solution, using diphenyl ether as solvent and no initiator, as compared to the ring-opening polymerization of L-lactide and other lactone using 1-dodecanol as initiator.

Since the drawbacks described above limit the possibilities of producing polyesters with sufficiently high molecular weights, this method is currently not used to produce polyesters such as PGA or PLGA, but also for example poly(mandelic acid) (PMA), at commercial scale. Nevertheless, there is an increasing demand for more sustainable polymers and, as a consequence, there is a need for cheaper production routes, especially for GA and LA containing polymers. Therefore, the direct polycondensation approach is still explored as an alternative for producing these polyesters at industrial scale.

Some research has been reported on exploring synthetic routes for PGA production. However, only limited research has been published on producing high molecular weight PLGA copolymers. In fact, the majority of the research on polycondensation PLGA or PGA copolymers reports low molecular weight products (Mₙ below 14 KDa). Although such copolymers may be useful for biomedical applications, e.g. drug delivery systems, they are not suitable for a wider range of applications where properties like mechanical strength are also relevant. There is still a need for suitable, less expensive and economically feasible synthetic routes for commercial production of high molecular weight products.

It would be advantageous to provide an efficient process, preferably less expensive and more economically feasible, for the production of polyester (co)polymers comprising hydroxycarboxylic acids, in particular α-hydroxycarboxylic acids, such as GA, LA, mandelic acid, and the like, wherein (new) high molecular weight (co)polyesters are produced, preferably with improved properties, such as better biodegradability, mechanical, thermal, barrier and caustic resistance properties, which can be applied in a broad range of applications, for which there is huge interest in the market.

### SUMMARY OF THE INVENTION

Accordingly, the present invention provides a process for the preparation of a polyester, comprising, in the presence of a catalyst, esterification of at least one monomer selected from hydroxycarboxylic acids to form oligomers, followed by polycondensation to form a (co)polymer comprising monomeric units derived from the at least one monomer, wherein the at least one monomer is selected from α- and/or β-hydroxycarboxylic acids, and in the process also a monohydric alcohol is added in which the hydroxy group is the only reactive functional group, in an amount of 2.5-150 weight % with regard to the total weight of monomers, the alcohol having a boiling point at ambient pressure of equal to or higher than 175 °C and an acid dissociation constant (pKa) of equal to or less than 12.0 and equal to or more than 7.0.

Advantageously, it was found that the monohydric alcohol used in the process according to the invention facilitates the polymerization reaction in such a way, that complex and expensive ring opening melt polymerization techniques as generally used in prior art processes (employing for example the cyclic dimers glycolide and/or lactide), are not needed to produce the related polyester (co)polymer (such as PLA, PGA, PLGA), particularly with high number average molecular weight (Mn), generally 15000 grams/mole and higher. By using the process according to the present invention, it is possible to produce the desired polyester (co)polymers directly from the relevant hydroxycarboxylic acid(s).

The present invention provides an advantageous process for the preparation of both existing and, in particular, novel polyester (co)polymers. Said polyester copolymers according to the invention may advantageously be used in a broad range of (industrial) applications, such as in films, fibres, injection (blow) moulded parts and packaging materials.

In addition, the invention provides a composition comprising any one of said novel polyester (co)polymers and in addition one or more additives and/or one or more additional polymers.

Further, the invention provides an article comprising the polyester (co)polymer according to the present invention or a composition comprising said polyester (co)polymer and one or more additives and/or additional polymers.

### DETAILED DESCRIPTION OF THE INVENTION

The present invention relates to a polymerization process for the production of a polyester (co)polymer (i.e.: a polymer or copolymer). By a "polyester" herein is understood a polymer comprising a plurality of monomer units linked via ester functional groups in its main chain. An ester functional group can be formed by reacting an hydroxyl group (-OH) with a carboxyl/carboxylic acid group (-C(=O)OH). By a polyester copolymer is herein understood a polyester wherein more than one type of monomer units are joined in the same polymer main chain.

By a "monomer unit" is herein understood a unit as included in the polyester copolymer, which unit can be obtained after polymerization of a monomer, that is, a "monomer unit" is a constitutional unit contributed by a single monomer or monomer compound to the structure of the polymer, i.e. herein units of at least one hydroxycarboxylic acid. By a "monomer" or "monomer compound" is herein understood the at least one starting hydroxycarboxylic acid to be polymerized.

In the process, at least one monomer is selected from α- and/or β-hydroxycarboxylic acids, and in particular preferred are the α-hydroxycarboxylic acids lactic acid and glycolic acid. Preferred β-hydroxycarboxylic acids are 3-hydroxybutanoic acid, 3-hydroxypentanoic acid, 3-hydroxyhexanoic acid, 3-hydroxyoctanoic acid, 3-hydroxydecanoic acid and 3-hydroxydodecanoic acid In addition to the at least one monomer selected from α- and/or β-hydroxycarboxylic acids, optionally one or more additional monomers can be used in the process of the invention. Any further monomer herein is selected from the more generic group of hydroxycarboxylic acids, including other α- and/or β-hydroxycarboxylic acids, such as for example mandelic acid, 3-hydroxypropionic acid, 2-, 3- and 4-hydroxybutyric acid, hydroxycaproic acid, hydroxyvaleric acid, hydroxyhexanoic acid, hydroxyheptanoic acid, hydroxyoctanoic acid, hydroxynonanoic acid, hydroxymethylfurancarboxylic acid or hydroxybenzoic acid or a mixture of these hydroxycarboxylic acids.

A particularly preferred process of the invention is a process wherein one monomer is lactic acid and another monomer is glycolic acid, in particular 5 to 25 mol % of lactic acid and 75 to 95 mol % of glycolic acid making together a total of 100 mol %, and especially 10 mol % of lactic acid and 90 mol % of glycolic acid.

The process of the invention comprises adding a monohydric alcohol in the process, in which alcohol the hydroxy group is the only reactive functional group, and the alcohol having a boiling point, at ambient pressure, of equal to or higher than 175 °C, up to equal to or lower than 300 °C, and an acid dissociation constant (pKa) of equal to or less than 12.0 and equal to or more than 7.0. The amount of the alcohol used is 2.5 -150 weight %, preferably 5 -150 %, more preferably 50 - 140 %, and particularly 60 - 135 %, and especially 70 - 130 %, with respect to the total weight of monomers. In particular, said monohydric alcohol is an optionally substituted phenol, such as phenol, 4-alkylphenol, 4-alkoxyphenol, 2-alkylphenol, 2-alkoxyphenol, etc., or any mixture thereof, and more preferably 4-methylphenol and/or 2-alkoxyphenol (in particular 2-methoxyphenol).

For certain specific polyesters, preferably specific combinations of a certain monohydric alcohol with a specific catalyst are used. For example, for the production of PLA, a polycondensation route starting from L-lactic acid and assisted by small amounts of phenol in the presence of SnOct₂ as catalyst was found to produce better results than certain other combinations. Therefore, for the production of PLA, the amount of the alcohol used is preferably 2.5 - 30 weight %, and more preferably 5 - 20 %, with respect to the total weight of monomers, if the alcohol is phenol, in particular in combination with SnOct₂ as catalyst.

The addition of the monohydric alcohol may take place before the reaction starts, e.g. preferably by first mixing the monomer(s) with the alcohol, but it may also be added in a later stage during the reaction, or both at the start and during the reaction, whenever required. Preferably, the monohydric alcohol is added before or during the esterification step. The monohydric alcohol may serve as a reactive diluent in the reaction mixture, which may be desirable or considered necessary under certain circumstances.

If deemed necessary, for example if the viscosity of the reaction mixture is very high and dilution is favourable or considered required, advantageously also solvents may be added to the reaction mixture, wherein said solvents are selected from liquid chemicals not carrying reactive substituents, such as diphenylether, dimethoxybenzene, and the like. Therefore, in an embodiment, in the process of the invention further a solvent is added at the beginning of the process or in the course of esterification.

As the process of the invention proceeds, the monohydric alcohol(s) present in the reaction mixture, is/are released from the reactor. The released materials can advantageously be separated and purified to be recycled. Therefore, another embodiment of the invention relates to the above described polymerization process, comprising in addition, separating the monohydric alcohol (e.g. by distillation), optionally followed by purifying the separated materials to recover the purified monohydric alcohol, and preferably recycling said purified monohydric alcohol into the process.

The amounts of each of the different monomeric units in the polyester copolymer can be determined by proton nuclear magnetic resonance (¹H NMR). One skilled in the art would easily find the conditions of analysis to determine the amount of each of the different monomer units in the polyester copolymer.

The polyester copolymer(s) according to the invention can be a random copolymer or may sometimes also have a more blocky microstructure.

The number average molecular weight (Mn) of the polyester copolymer(s) may vary and may depend for example on the added monomer type and amount, the catalyst, the reaction time and reaction temperature and pressure.

The polyester copolymer(s) according to the invention preferably has/have a number average molecular weight of equal to or more than 15000 grams/mole, more preferably of equal to or more than 20000 grams/mole up to 200000 grams/mole.

The weight average molecular weight (Mw) and the number average molecular weight (Mn) can be determined by means of gel permeation chromatography (GPC) at 35° C, using for the calculation poly(methyl methacrylate) standards as reference material, and using hexafluoro-2-propanol as eluent. All molecular weights herein are determined as described under the analytical methods section of the examples.

The polyester (co)polymer according to the present invention has a polydispersity index (PDI) in the range from equal to or higher than 1.7 to equal to or lower than 2.5, and preferably 1.9 to 2.3. The PDI is the ratio of weight average molecular weight (Mw) to number average molecular weight (Mn), i.e. Mw/Mn, indicating the distribution in chain length of the polymers. High Mw generally is related to the viscosity of a polymer in molten state, and as such important for the processability.

The glass transition temperature of the polyester copolymer can be measured by conventional methods, in particular by using differential scanning calorimetry (DSC) with a heating rate of 10 °C/minute in a nitrogen atmosphere. All glass transition temperatures herein are determined as described under the analytical methods section of the examples.

Preferably, the polyester copolymer as a whole is (via its monomers) partially or completely obtained and/or derived from one or more sustainable sources, preferably from sustainable biomass material and/or carbon monoxide and/or carbon dioxide. More preferably the polyester copolymer is completely obtained and/or derived from such one or more sustainable sources. Preferably the polyester copolymer is obtained and/or derived, in part or in whole, from sources other than coal, gas or petroleum.

The process for the production of a polyester copolymer can comprise melt polymerization and, in the case of semicrystalline polymers, optionally solid state polymerization. For example, the process can comprise melt mixing of the monomers in the presence of a metal-containing catalyst (also referred to herein as melt polymerization).

The polyester copolymer according to the invention can for example be produced by a process for the production of a polyester copolymer comprising melt mixing of the monomers, at a temperature in the range from equal to or more than 150 °C, more preferably equal to or more than 180°C, up to equal to or less than 230°C, more preferably equal to or less than 220°C in the presence of a metal-containing catalyst. The monohydric alcohol is added at a suitable stage of the process, as described herein above. The melt mixing can suitably be carried out in a reactor. Hence the melt mixing may suitably be preceded by an introduction stage, wherein the monomers are introduced into a reactor, and succeeded by a recovery stage, wherein the polyester copolymer is recovered from a reactor.

The process for the production of the polyester copolymer can also comprise a combination of melt polymerization and solid state polymerization, wherein the polyester copolymer product of a melt polymerization step is followed by a solid state polymerization step.

The process according to the invention may be carried out in the presence of one or more additives, such as ether suppressants, and stabilizers, for example light stabilizers, UV stabilizers and heat stabilizers, fluidifying agents, flame retardants and antistatic. Additives may be added at the start of the process, or during or after the polymerization reaction. Other additives include primary and/or secondary antioxidants. A primary antioxidant can for example be a sterically hindered phenol, such as the compounds Hostanox^{®} 0 3, Hostanox^{®} 0 10, Hostanox^{®} 0 16, Ultranox^{®} 210, Ultranox^{®}276, Dovernox^{®} 10, Dovernox^{®} 76, Dovernox^{®} 3114, Irganox^{®} 1010 or Irganox^{®} 1076. A secondary antioxidant can for example be a trivalent phosphorous-comprising compounds, such as Ultranox^{®} 626, Doverphos^{®} S-9228 or Sandostab^{®} P-EPQ.

The process according to the invention may comprise several stages. Suitably the process according to the invention may comprise a transesterification stage and a polycondensation stage, wherein the transesterification stage is carried out prior to the polycondensation stage. The transesterification stage may suitably be preceded by an introduction stage, wherein the hydroxy carboxylic acid monomers, and any optional additional monomers, are introduced into a reactor. The polycondensation stage may suitably be succeeded by a recovery stage, wherein the polyester copolymer is recovered from a reactor.

The process according to the invention can be carried out in a batch-wise, semi-batch-wise or continuous mode. The transesterification stage and the polycondensation stage may conveniently be carried out in one and the same reactor, but may also be carried out in two separate reactors, for example where the transesterification stage is carried out in a first transesterification reactor and the polycondensation stage is carried out in a second polycondensation reactor.

The process according to the invention may thus suitably comprise the following stages:
- an introduction stage, wherein the hydroxycarboxylic acid monomer(s), and optional additional monomer(s), are introduced into a reactor, suitably together with an amount of the monohydric alcohol;
- a (trans)esterification stage, wherein the monomers are reacted in a (trans)esterification reaction, optionally while adding an amount of the monohydric alcohol, and optionally a pre-polycondensation reaction, to thereby produce oligomers;
- a polycondensation stage, wherein the oligomers are reacted further in a polycondensation reaction to thereby produce the polyester copolymer; and
- a recovery stage, wherein the polyester copolymer is recovered from the reactor.

In any introduction stage, all relevant reagents / components (monohydric alcohol, catalyst, monomers) can be introduced into the reactor simultaneously, for example in the form of a feed mixture, or in separate parts. The monomers can be introduced into the reactor in a molten phase or they can be molten and mixed after introduction into the reactor.

Any (trans)esterification stage is carried out over a reaction time that generally varies depending on the selected temperature, however, preferably in the range from equal to or more than 0.5 hour, more preferably equal to or more than 1.0 hour, to equal to or less than 16.0 hour, more preferably equal to or less than 12.0 hour. During a transesterification stage, the temperature may be stepwise or gradually increased.

The polycondensation stage may suitably be carried out at a temperature equal to or higher than the temperature at which the transesterification stage is carried out. The transesterification stage may for example be carried out at a temperature in the range from equal to or more than 150°C, more preferably equal to or more than 180°C, and even more preferably equal to or more than 190°C, to equal to or less than 230°C. The polycondensation stage may suitably succeed the transesterification stage and the polycondensation stage can for example be carried out at a temperature in the range from equal to or more than 195°C, more preferably equal to or more than 200°C, to equal to or less than 275°C, more preferably equal to or less than 255°C and most preferably equal to or less than 235°C.

Any polycondensation stage is preferably carried out over a reaction time in the range from equal to or more than 0.5 hour, more preferably equal to or more than 1.0 hour, to equal to or less than 8.0 hours, more preferably equal to or less than 6.0 hours. During a polycondensation stage, the temperature may be stepwise or gradually increased.

The polycondensation stage may be succeeded by a recovery stage, wherein the polyester copolymer as described above is recovered from the reactor. The polyester can for example be recovered by extracting it from the reactor in the form of a string of molten polymer. This string can be converted into granules using conventional granulation techniques.

The esterification/transesterification stage is preferably carried out under an inert gas atmosphere, suitably at ambient pressure or slightly above that, e.g. up to 5 bar. Preferably, the polycondensation stage is carried out at reduced pressure. The polycondensation stage may for example be carried out at a pressure in the range from equal to or more than 0.01 mbar (corresponding to 1 Pascal), more preferably equal to or more than 0.1 mbar (corresponding to 10 Pascal) to equal to or less than 10.0 mbar (corresponding to 1.0 KiloPascal), more preferably equal to or less than 5.0 mbar (corresponding to 500 Pascal), and especially less than 1 mbar
The process according to the invention is suitably carried out in the presence of a (metal-containing) catalyst. Acids like p-toluenesulfonic acid may for example be used as catalysts. Metal-containing catalysts may for example comprise derivatives of tin (Sn), titanium (Ti), zirconium (Zr), germanium (Ge), antimony (Sb), bismuth (Bi), hafnium (Hf), ytterbium (Yb), magnesium (Mg), cerium (Ce), zinc (Zn), cobalt (Co), iron (Fe), manganese (Mn), calcium (Ca), strontium (Sr), sodium (Na), lead (Pb), potassium (K), aluminium (Al), and/or lithium (Li). Examples of suitable metal-containing catalysts include salts of Li, Ca, Mg, Mn, Zn, Pb, Sb, Sn, Ge, Yb, and Ti, such as acetate salts and oxides, including glycol adducts, and Ti alkoxides. Examples of such compounds can, for example, be those given in US2011282020A1 in sections [0026] to [0029], and on page 5 of WO 2013/062408 A1. Preferably the metal-containing catalyst is a tin-containing catalyst, for example a tin(IV)-containing or tin(II)-containing catalyst. More preferably the metal-containing catalyst is an alkyltin(IV) salt and/or alkyltin(II) salt. Examples include alkyltin(IV) salts, alkyltin(ll) salts, dialkyltin(IV) salts, dialkyltin(II) salts, trialkyltin(IV) salts, trialkyltin(ll) salts or a mixture of one or more of these. These tin(IV) and/or tin(ll) catalysts may be used with alternative or additional metal-containing catalysts. Examples of alternative or additional metal-containing catalysts that may be used include one or more of titanium(IV) alkoxides or titanium(IV) chelates, zirconium(IV) chelates, or zirconium(IV) salts (e.g. alkoxides); hafnium(IV) chelates or hafnium(IV) salts (e.g. alkoxides); yttrium(III) alkoxides or yttrium(III) chelates; lanthanum(III) alkoxides or lanthanum chelates; scandium(III) alkoxides or chelates; cerium(III) alkoxides or cerium chelates. Preferred catalysts are selected from butyl stannoic acid, tin(ll) 2-ethylhexanoate, tin(ll) chloride, titanium butoxide, and any combination thereof. Preferably, the catalyst is selected from butyl stannoic acid, tin(ll) chloride and tin(ll) 2-ethylhexanoate. An exemplary metal-containing catalyst is in particular butyl stannoic acid (also known as n-butyltinhydroxideoxide).

In a preferred process, the amount of catalyst used is selected from 0.01 to 0.1 molar equivalents with respect to the at least one monomer. The catalyst may be added at the start of the reaction, or in portions during the reaction, for example in a preferred embodiment a portion before the esterification stage and a portion at the start of the polycondensation stage.

The process according to the invention can further comprise, after a recovery stage (i.e. wherein the polyester copolymer is recovered from the reactor) as described above, a stage of polymerization in the solid state. That is, the polyester copolymer recovered as described above can be polymerized further in the solid state, thereby increasing chain length. Such polymerization in the solid state is also referred to as a solid state polymerization (SSP). Such a solid state polymerization advantageously allows one to further increase the number average molecular weight of the polyester copolymer. It can further advantageously enhance the mechanical and rheological properties of polyester copolymers before injection blow molding or extruding. The solid state polymerization preferably comprises heating the polyester copolymer in the essential or complete absence of oxygen and water, for example by means of a vacuum or purging with an inert gas.

Advantageously the process according to the invention can therefore comprise:
- a melt polymerization wherein the above described monomers are polymerized in a melt to produce a polyester (co)polymer melt product;
- an optional pelletisation wherein the polyester (co)polymer melt product is converted into pellets, and the optional drying of the pellets under vacuum or with the help of inert gas purging;
- a solid state polymerization of the polyester (co)polymer melt product, optionally in the form of pellets, at a temperature above the Tg of the polyester (co)polymer melt product and below the melt temperature of the polyester (co)polymer melt product.

For the present invention, solid state polymerization may suitably be carried out at a temperature in the range from equal to or more than 150°C to equal to or less than 220°C. The solid state polymerization may suitably be carried out at ambient pressure (i.e. 1.0 bar atmosphere corresponding to 0.1 MegaPascal) whilst purging with a flow of an inert gas (such as for example nitrogen or argon) or may be carried out at a vacuum, for example a pressure equal to or below 100 millibar (corresponding to 0.01 MegaPascal). The solid state polymerization may suitably be carried out for a period up to 120 hours, more suitably for a period in the range from equal to or more than 2 hours to equal to or less than 60 hours. The duration of the solid state polymerization may be tuned such that a desired final number average molecular weight for the polyester copolymer is reached.

A suitable and advantageous embodiment of the process of the invention comprises: an esterification step, comprising (a) in a reaction vessel, in the presence of a catalyst, heating the at least one monomer selected from lactic acid and glycolic acid in the presence of a monohydric alcohol in an amount of 5-150 weight % with regard to the total weight of monomers, to a temperature of 180 to 200 °C for a period of 6 to 12 hours; and subsequently, a polycondensation step, comprising (b) gradually reducing the pressure to a vacuum of lower than 5 mbar, and particularly lower than 1 mbar, with continued stirring for a period of 1 to 3 hours, while removing condensation products (water); while optionally during step (b) further increasing the temperature by 10 to 30 °C to a maximum of 210 °C - to facilitate removal of the monohydric alcohol and remaining condensation products from the reactor.

In a further advantageous embodiment a polyester (co)polymer is provided, preferably obtained or obtainable by a process according to this disclosure, having a number average molecular weight, as measured by gel permeation chromatography of 15000 daltons or more, and a polydispersity index in the range of equal to or more than 1.7 to equal to or less than 2.5. Particularly preferred are polyester (co)polymers consisting of at least 80% of monomer units derived from α- and/or β-hydroxycarboxylic acids.

The polyester (co)polymer obtained by or obtainable by the process according to this disclosure may have favorable properties, such as improved water and oxygen permeability when compared to for example polylactic acid (PLA) and/or polyethyleneterephthalate (PET).

The polyester (co)polymer obtained by or obtainable according to the process of this disclosure can suitably be combined with additives and/or other (co)polymers and therefore the invention further provides a composition comprising said polyester copolymer and in addition one or more additives and/or one or more additional other (co)polymers.

Such composition can for example comprise, as additive, nucleating agents. These nucleating agents can be organic or inorganic in nature. Examples of nucleating agents are talc, calcium silicate, sodium benzoate, calcium titanate, boron nitride, zinc salts, porphyrins, chlorin and phlorin.

The composition according to the invention can also comprise, as additive, nanometric (i.e. having particles of a nanometric size) or non-nanometric and functionalized or non-functionalized fillers or fibres of organic or inorganic nature. They can be silicas, zeolites, glass fibres or beads, clays, mica, titanates, silicates, graphite, calcium carbonate, carbon nanotubes, wood fibres, carbon fibres, polymer fibres, proteins, cellulose fibres, lignocellulose fibres and nondestructured granular starch. These fillers or fibres can make it possible to improve the hardness, the stiffness or the permeability to water or to gases. The composition can comprise from 0.1% to 75% by weight, for example from 0.5% to 50% by weight, of fillers and/or fibres, with respect to the total weight of the composition. The composition can also be of composite type, that is to say can comprise large amounts of these fillers and/or fibres.

The composition can also comprise, as additive, opacifying agents, dyes and pigments. They can be chosen from cobalt acetate and the following compounds: HS-325 Sandoplast^{®} Red BB, which is a compound carrying an azo functional group also known under the name Solvent Red 195, HS-510 Sandoplast^{®} Blue 2B, which is an anthraquinone, Polysynthren^{®} Blue R and Clariant^{®} RSB Violet.

The composition can also comprise, as additive, a processing aid for reducing the pressure in the processing device. A mould-release agent, which makes it possible to reduce the adhesion to the equipment for shaping the polyester, such as the moulds or the rollers of calendering devices, can also be used. These agents can be selected from fatty acid esters and amides, metal salts, soaps, paraffins or hydrocarbon waxes. Specific examples of these agents are zinc stearate, calcium stearate, aluminium stearate, stearamide, erucamide, behenamide, beeswax or Candelilla wax.

The composition can also comprise other additives, such as stabilizers, etc. as mentioned herein above.

In addition, the composition can comprise one or more additional polymers other than the one or more polyester copolymers according to the invention. Such additional polymer(s) can suitably be chosen from the group consisting of polyamides, polystyrene, styrene copolymers, styrene/acrylonitrile copolymers, styrene/acrylonitrile/butadiene copolymers, polymethyl methacrylates, acrylic copolymers, poly(ether/imide)s, polyphenylene oxides, such as poly(2,6-dimethylphenylene oxide), polyphenylene sulfide, poly(ester/carbonate)s, polycarbonates, polysulphones, polysulphone ethers, polyetherketones and blends of these polymers. The composition can also comprise, as additional polymer, a polymer which makes it possible to improve the impact properties of the polymer, in particular functional polyolefins, such as functionalized polymers and copolymers of ethylene or propylene, core/shell copolymers or block copolymers. The compositions according to the invention can also comprise, as additional polymer(s), polymers of natural origin, such as starch, cellulose, chitosans, alginates, proteins, such as gluten, pea proteins, casein, collagen, gelatin or lignin, it being possible or not for these polymers of natural origin to be physically or chemically modified. The starch can be used in the destructured or plasticized form. In the latter case, the plasticizer can be water or a polyol, in particular glycerol, polyglycerol, isosorbide, sorbitans, sorbitol, mannitol or also urea. Use may in particular be made, in order to prepare the composition, of the process described in the document WO 2010/010282A1.

These compositions can suitably be manufactured by conventional methods for the conversion of thermoplastics. These conventional methods may comprise at least one stage of melt or softened blending of the polymers and one stage of recovery of the composition. Such blending can for example be carried out in internal blade or rotor mixers, an external mixer, or single-screw or co-rotating or counter-rotating twin-screw extruders. However, it is preferred to carry out this blending by extrusion, in particular by using a co-rotating extruder. The blending of the constituents of the composition can suitably be carried out at a temperature ranging from 220 to 300°C, preferably under an inert atmosphere. In the case of an extruder, the various constituents of the composition can suitably be introduced using introduction hoppers located along the extruder.

The invention also relates to an article comprising a polyester copolymer according to the invention or a composition comprising a polyester copolymer according to the invention and one or more additives and/or additional polymers.

The polyester copolymer may conveniently be used in the manufacturing of articles such as films, fibres, injection moulded parts and packaging materials, such as for example receptacles or coated paper applications. The use of the polyester copolymer is especially advantageous where such films, fibres, injection moulded parts or packaging materials need to be cold-resistant. The article can be a fibre for use in for example the textile industry. These fibres can be woven, in order to form fabrics, or also nonwoven. As said, the article can be a film, or a sheet. These films or sheets can be manufactured by calendering, cast film extrusion or film blowing extrusion techniques. These films can be used for the manufacture of labels or insulators. The article can be manufactured from the polyester copolymer or a composition comprising a polyester copolymer and one or more additives and/or additional polymers using conventional conversion techniques. The article can also be a container for transporting gases, liquids and/or solids. The containers concerned may be flasks, bottles, for example sparkling or still water bottles, juice bottles, soda bottles, carboys, alcoholic drink bottles, medicine bottles or bottles for cosmetic products, dishes, etc.. These containers can be of any size. The article may for example be suitably manufactured by extrusion-blow moulding, thermoforming or injection-blow moulding.

The polyester copolymer may also be used for paper-coating in the form of a powder, solution or as a melt, in for example rod/dispersion coating, spray coating and/or extrusion/blown coating technologies.

The present invention therefore also conveniently provides a method for manufacturing an article, comprising the use of one or more polyester copolymers according to the invention and preferably comprising the following steps: 1) the provision of a polyester copolymer obtainable according to the process of this invention; 2) melting said polyester copolymer, and optionally one or more additives and/or one or more additional polymers, to thereby produce a polymer melt; and 3) extrusion-blow moulding, thermoforming and/or injection-blow moulding the polymer melt into the article.

The article can also be manufactured according to a process comprising a stage of application of a layer of polyester in the molten state to a layer based on organic polymer, on metal or on adhesive composition in the solid state. This stage can be carried out by pressing, overmoulding, lamination, extrusion-lamination, coating or extrusion-coating.

The invention is further illustrated by the following non-limiting examples.

### EXAMPLES

### List of abbreviations

DSC = differential scanning calorimetry
DMSO-d₆ = deuterated dimethyl sulfoxide
GA = glycolic acid
GPC = gel permeation chromatography
HFIP-d₂ = deuterated hexafluoroisopropanol
LA = lactic acid
MA = monohydric alcohol
Mn = number average molecular weight
4-MP = 4-methylphenol
Mw = weight average molecular weight
PGA = polyglycolic acid
PLA = polylactic acid
PLGA = poly(lactide-co-glycolide) copolymer
PDI = Mw/Mn = polydispersity index
TCE- d₂ = 1,2-dideutero-1,1,2,2-tetrachloroethane
Tg = glass transition temperature

### Materials and analytical techniques

All chemicals were used without further purification. Glycolic acid (99%) and L-Lactic acid (L-LA) (90% solution in water), phenol (99%), 4-methylphenol (99%), 1,4-dimethoxy benzene and 2-methoxyphenol (guaiacol) were purchased from Acros Organics.Butyl stannoic acid (BuSnO(OH)) (97%), tin(ll) 2-ethylhexanoate (Sn(Oct)₂), tin(II) chloride (SnCl₂), p-toluenesulfonic acid (pTSA), titanium butoxide Ti(OBu)₄, and ytterbium(III) trifluoromethanesulfonate [Yb(OTf)₃] were purchased from Sigma Aldrich. Deuterated dimethyl sulfoxide (DMSO-d₆) and hexafluoroisopropanol (HFIP-d₂) were also obtained from Sigma Aldrich.

All chemicals were used without additional purification.

The reaction progression and structures of all PLA samples and copolymers with initial composition of 90 and 80 mol % of GA and homopolymer (100% GA), was followed using ¹H NMR spectroscopy on a Bruker AMX 400 (1H, 400.13 MHz) with DMSO-d₆ as solvent. The final products containing 100 and 90 mol% of GA were no longer soluble in this solvent. Although they are soluble in HFIP-d₂, due to its high cost, only some representative samples were analyzed.

The extend of racemization in some of the PLA samples was recorded with ¹³C NMR in DMSO-d₆ in a Bruker Avance 500.

The molecular weight distribution was determined by Gel Permeation Chromatography (GPC). The measurements were carried out in a Merck-Hitachi LaChrom HPLC system, equipped with two PL gel 5 µm MIXED-C (300×7.5 mm) columns using hexafluoroisopropanol as mobile phase and poly(methyl methacrylate) (PMMA) as calibration standards. The reported molecular weights were calculated with the software package Wyatt Astra 6.1.

The thermal transitions were determined using a differential scanning calorimeter DSC 3+ STAR^{e} system from Mettler Toledo.

For PLGA copolymers, approximatively 5 mg of each sample were introduced in sealed aluminum pans (40 µm) and heated from room temperature to 200 °C (10 °C·min⁻¹). The samples were maintained at that temperature for 2 minutes and subsequently cooled down to 25 °C at the same rate. Another heating scan was recorded under the same conditions.

For PGA homopolymers, a similar method with 2 heating and cooling scans was applied from room temperature to 240 °C. The reported glass transition temperature T_{g} and melting temperature Tₘ were taken from the second scan. The thermal stability of some of the most representative samples was determined using a TGA/DSC 3+ STARe system from Mettler Toledo. For this purpose, about 10 mg of copolymer were introduced in a sealed aluminum sample vessel (40µm). Subsequently, the samples were heated from room temperature up to 400 °C (10°C.min⁻¹) under nitrogen atmosphere with a flow rate of 50 mL.min⁻¹.

For PLA samples, typically, about 5 mg of sample were placed in a sealed 40µm aluminum crucible. All samples were heated from room temperature to 180 °C under nitrogen atmosphere (50 mL·min⁻¹) at 10 °C·min⁻¹ and subsequently cooled down to 25 °C at the same rate. The same program was repeated a second time and the thermal transitions were taken from the resulting curve.

### Example 1. Synthesis of PLGA10/90 and PLGA20/80 from polycondensation of GA and LA, using 2-methylphenol

The reaction between lactic acid (LA) and glycolic acid (GA) monomers in the presence of 4-methylphenol (4-MP) can lead to the formation of GA-GA, LA-GA and/or LA-LA oligomers via the interaction between their hydroxy and carboxylic terminal groups, with water as side product. At the same time, both acids can react with 4-MP via its -OH group. Formed oligomers containing the acid group at the end of their chain can also react with the hydroxy group of free 4-MP in the reaction mixture. Therefore, the esterification reaction can proceed until no more acid end groups remain in the reaction medium, which could result in all GA-GA, LA-GA, or LA-LA oligomers attached to 4-MP forming phenol esters. The following step consists of transesterification of the formed phenol esters with exchange between the ester and terminal hydroxy groups. Since this reaction is reversible, 4-MP is distilled out of the system to drive the equilibrium towards increasing molecular weight.

In a typical experiment, 90 or 80 mol% of GA and 10 or 20 mol% of LA, respectively, for a total of 20 grams of monomer load per batch were used in the presence of 0.1 mol % of BuSnO(OH) as catalyst. The reactions were carried out in the presence of 4-MP. For comparison, experiments were performed without 4-MP (thus a typical melt polycondensation), and with non-reactive 1,4-dimethoxy benzene, respectively. Initially, the effect of 4-MP addition in the molecular weight was studied. For this purpose, amounts of 4-MP (if used) were varied up to 0100 mol % with respect to the total monomer load.

Note: both L and racemic LA were tested and no difference was observed at contents of equal or less than 20% of LA.

Procedure: the GA and LA monomers, 4-MP or 4-dimethoxy benzene, and the catalyst were introduced in a tree necked reactor equipped with a mechanical stirrer (105 rpm) and a nitrogen inlet and outlet. The esterification stage was carried out at 190 °C (oil bath temp.) for about 9 hours under nitrogen atmosphere (30ml·min⁻¹) and at ambient pressure. Subsequently the temperature was increased to 200 °C and the pressure was gradually reduced until reaching 1 mbar in a period of 2 hours with removal of 4-MP.

The same procedure was carried out for the comparative melt polycondensation case, thus without addition of 4-MP or 4-dimethoxy benzene.

Finally, the products were recovered and analyzed (¹H NMR, GPC, thermal properties).

Results are presented in Table 1.

**Table 1:**

| | **PLGA with 90 mol% of glycolic acid and 10 mol% of lactic acid in the feed** | | | | | | | | | |
|---|---|---|---|---|---|---|---|---|---|---|
| **Example** | **MA (or other)** | **MA amount (mol %)** | **MA amount (wt %)** | **Catalyst** | **Catalyst amount (mol %)** | **Reaction T (oil bath, °C)** | **Reaction time (h)** | **Mₙ (KDa)** | **PDI** | **T_{g} (°C)** |
| PLGA_{10/90}-1** | none | 0 | 0 | BuSnO(OH) | 0.1 | 190-200 | 11 | 9.4 | 2.4 | 36 |
| PLGA_{10/90}-2 | 4-MP | 50 | 70 | BuSnO(OH) | 0.1 | 190-200 | 11 | 16.1 | 2.1 | 39 |
| PLGA_{10/90}-3 | 4-MP | 75 | 105 | BuSnO(OH) | 0.1 | 190-200 | 11 | 23.3 | 2.0 | 40 |
| PLGA_{10/90}-4 | 4-MP | 100 | 140 | BuSnO(OH) | 0.1 | 190-200 | 11 | 16.2 | 2.0 | 39 |
| PLGA_{10/90}-5** | 1,4 dimethoxy benzene | 75 | 134 | BuSnO(OH) | 0.1 | 190-200 | 11 | 13.0 | 2.2 | 38 |
| PLGA_{10/90}-6 | 4-MP | 75 | 105 | none | 0 | 190-200 | 11 | 3.7 | 3.4 | nd |
| PLGA_{10/90}-7 | 4-MP | 75 | 105 | BuSnO(OH) | 0.05 | 190-200 | 8 | 23.4 | 2.0 | 41 |
| PLGA_{10/90}-8 | 4-MP | 75 | 105 | BuSnO(OH) | 0.05 | 190-205 | 8 | 21.0 | 2.2 | 41 |
| PLGA_{10/90}-9 | 4-MP | 75 | 105 | BuSnO(OH) | 0.05 | 190-210 | 7.5 | 20.5 | 2.2 | 44 |
| PLGA_{10/90}-10 | 4-MP | 75 | 105 | BuSnO(OH) | 0.02 | 190-200 | 10 | 17.2 | 2.0 | 39 |
| PLGA_{10/90}-11 | 4-MP | 75 | 105 | BuSnO(OH) | 0.02 | 190-205 | 9 | 17.4 | 2.3 | 39 |
| PLGA_{10/90}-12 | 4-MP | 75 | 105 | BuSnO(OH) | 0.02 | 190-210 | 8.5 | 21.5 | 2.0 | 40 |
| PLGA_{10/90}-13 | 4-MP | 75 | 105 | BuSnO(OH) | 007 | 190-200 | 10 | 23.2 | 2.3 | 41 |
| PLGA_{10/90}-14 | 4-MP | 75 | 105 | BuSnO(OH) | 0.05^{a} | 190-210; 200e | 7.5 | 30.8 | 2.0 | 41 |
| PLGA_{10/90}-15^{b} | 4-MP | 75 | 105 | BuSnO(OH) | 0.05^{a} | 190-200 | 7.5 | 31.5 | 2.0 | 41 |
| PLGA_{10/90}-16 | 4-MP | 75 | 105 | Sn(Oct)₂ | 0.05^{a} | 190-200 | 10 | 16.7 | 2.0 | 40 |
| PLGA_{10/90}-17 | 4-MP | 75 | 105 | Ti (OBu)₄ | 0.05^{a} | 190-200 | 14 | 16.2 | 2.1 | 40 |
| PLGA_{10/90}-18 | 4-MP | 75 | 105 | BuSnO(OH) | 0.05^{a} | 190-200 | 10 | 25.2 | 2.1 | 41 |
| PLGA_{10/90}-20 | 4-MP | 75 | 105 | SnCl₂+pTSA | 0.05^{a} | 190-200 | 10 | 17.8 | 2.1 | 40 |
| PLGA_{10/90}-22 | 4-MP | 75 | 105 | SnCl₂ | 0.05^{a} | 190-200 | 14 | 19.3 | 2.0 | 40 |
| PLGA_{10/90}-23^{c} | 4-MP | 75 | 105 | BuSnO(OH) | 0.05 | 190-200 | 8 | 22.0 | 2.0 | 40 |
| PLGA_{10/90}-24^{d} | 4-MP | 75 | 105 | BuSnO(OH) | 0.05^{a} | 190-200 | 14 | 22.4 | 2.1 | |
| PLGA_{10/90}-25^{b,d} | 4-MP | 75 | 105 | BuSnO(OH) | 0.05^{a} | 190-200 | 14 | 30.3 | 2.0 | 41 |

| **PLGA with 80 mol% of glycolic acid and 20 mol% of lactic acid in feed** | | | | | | | | | | |
|---|---|---|---|---|---|---|---|---|---|---|
| PLGA_{20/80}-1** | none | 0 | 0 | BuSnO(OH) | 0.1 | 190-200 | 10 | 10.6 | 2.3 | 39 |
| PLGA_{20/80}-2 | 4-MP | 50 | 70 | BuSnO(OH) | 0.1 | 190-200 | 10 | 17.1 | 2.1 | 40 |
| PLGA_{20/80}-3 | 4-MP | 75 | 103 | BuSnO(OH) | 0.1 | 190-200 | 10 | 21.9 | 2.18 | 42 |
| PLGA_{20/80}-4 | 4-MP | 100 | 137 | BuSnO(OH) | 0.1 | 190-200 | 10 | 18.6 | 2.16 | 42 |
| PLGA_{20/80}-5 | 4-MP | 75 | 103 | BuSnO(OH) | 0.05 | 190-200 | 8 | 21.7 | 2.08 | 41 |
| PLGA_{20/80}-6^{c} | 4-MP | 75 | 103 | BuSnO(OH) | 0.05 | 190-200 | 8 | 20.2 | 2.03 | 41 |
| PLGA_{20/80}-7^{d} | 4-MP | 75 | 103 | BuSnO(OH) | 0.05^{a} | 190-200 | 12.5 | 27.2 | 2.02 | 42 |

| | | | | | | | | | | |
|---|---|---|---|---|---|---|---|---|---|---|
| ^{a} Catalyst added in two equal portions at the beginning of the reaction and before reducing pressure ^{b} Slow decompression from esterification stage ^{c} LD-lactic acid used as monomer instead of L lactic acid ^{d} 50 grams of initial monomer load ^{e} The reaction temperature was reduced first before applying vacuum **Comparative examples | | | | | | | | | | |

### Example 2. Synthesis of PLGA10/90 from polycondensation of GA and LA, using 2-methoxyphenol

2-methoxyphenol, also known as guaiacol, a naturally occurring organic compound with a wide application field, was also tested for the preparation of PLGA_{10/90}. The general procedure was carried out in a similar way as described in Example 1.

It was found that the esterification reaction between and GA and/or LA in presence of 2-methoxyphenol works best at temperatures above 200 °C (oil bath temp.). At 200 °C and below, the reactivity between 2-methoxyphenol and both acids is very low. The amount of 2-methoxyphenol was set as 75 mol% (120 weight %) of the total monomer load.

In Table 2 a summary is presented of the reaction conditions (temperature and time) together with glass transition temperature (Tg), number average molecular weight (Mn) and polydispersity index (PDI) obtained for the experiments performed using 2-methoxyphenol.

**Table 2**

| **Sample** | **MA (weight %)** | **Catalyst** | **Catalyst amount (mol %)** | **Reaction T (°C)** | **Reaction time (h)** | **Mₙ (KDa )** | **PDI** | **T_{g} (°C)** |
|---|---|---|---|---|---|---|---|---|
| PLGA_{10/90-26} | 120 | BuSnO(OH) | 0.05 | 190-205 | 12.0 | 21.5 | 2.1 | 40 |
| PLGA_{10/90-27} | 120 | BuSnO(OH) | 0.05 | 190-210;200^{a} | 10.5 | 28.6 | 2.0 | 40 |
| PLGA_{10/90-28} | 120 | SnCl₂ | 0.05 | 190-210;200^{a} | 12.5 | 24.2 | 2.0 | 39 |
| PLGA_{10/90-29} | 120 | SnOct₂ | 0.05 | 190-210;200^{a} | 10.5 | 22.5 | 2.2 | 40 |
| PLGA_{10/90-30} | 120 | pTSA+SnCl₂ | 0.05 | 190-210;200^{a} | 12.0 | 20.2 | 2.2 | 40 |

| | | | | | | | | |
|---|---|---|---|---|---|---|---|---|
| ^{a} The reaction temperature was reduced first before applying vacuum | | | | | | | | |

### Example 3 Synthesis of polyglycolic acid (PGA) from polycondensation of glycolic acid (GA)

A similar strategy as the one described in Example 1 was used to synthesize PGA. BuSnO(OH) was used as the catalyst. However, due to the very low solubility of PGA in any solvent, the analysis possibilities were limited.

In a typical experiment, 20 grams of GA were added in a 3 necked reactor equipped with a mechanical stirrer under nitrogen atmosphere. Reaction conditions were varied, e.g. different amounts of 4-MP, reaction temperature and time were tested, and adjusted according to the results obtained for each experiment.

Reference samples without using 4-MP and a sample with 1,4-dimethoxy benzene were also prepared.

Results are presented in Table 3.

**Table 3**

| **Sample** | **MA** | **MA (mol %)** | **MA (wt %)** | **Catalyst amount (mol%)** | **T_{g} (°C)** | **Tm (°C)** | **Tc (°C)** | **ΔHm (J/g)** | **DC^{b} (%)** | **Mₙ (KDa)** | **PDI** |
|---|---|---|---|---|---|---|---|---|---|---|---|
| PGA₁** | none | - | | 0.1 | 39 | 220 | 195 | 100.5 | 52 | 10.9 | 2.5 |
| PGA₂** | 1,4 - dimethoxy benzene | 10 | 18 | 0.1 | 41 | 220 | 191 | 79.9 | 42 | 11.2 | 2.4 |
| PGA₃ | 4-MP | 10 | 14 | 0.1 | 42 | 219 | 194 | 98.6 | 52 | 14.2 | 2.0 |
| PGA₄ | 4-MP | 50 | 71 | 0.1 | 41 | 220 | 196 | 96.9 | 51 | 16.7 | 2.9 |
| PGA₅ | 4-MP | 75 | 107 | 0.1 | 40 | 221 | 184 | 97.1 | 51 | nd | nd |
| PGA₆ | 4-MP | 50 | 71 | 0.05^{a} | 42 | 220 | 185 | 86.1 | 45 | 19.3 | 2.0 |
| PGA₇ | 4-MP | 75 | 107 | 0.05^{a} | 41 | 220 | 183 | 100.1 | 52 | 24.2 | 1.3 |

| | | | | | | | | | | | |
|---|---|---|---|---|---|---|---|---|---|---|---|
| ^{a} Catalyst added in two equal portions at the beginning of the reaction and before reducing pressure ^{b} Degree of crystallinity **Comparative examples | | | | | | | | | | | |

### Barrier property measurements

The copolymers PLGA_{10/90} and PLGA_{20/80} prepared as described in Example 1 were subsequently processed into films with compression molding using a thermal press (Carver AutoFour/3015-NE,H). The polymer samples were first dried under vacuum for 12 hours at 40 °C and subsequently sandwiched between two PTFE films (0.14 mm thickness) and 2 aluminum plates (3 mm thickness each). Compression temperatures were set as 180 °C and 195 °C for PLGA_{20/80} and PLGA_{10/90} samples, respectively. The sandwich was held for 1 minute at 0.5 ton and subsequently at 1 and 3 tons for 30 seconds in each case. The resulting films were quickly cooled down by putting the PTFE sandwich in contact with two cold aluminum plates. The sample thickness was measured at 12 different points using an electronic micrometer and subsequently averaged. The oxygen and water permeability of films from both types of copolymer with thickness between 100 and 130 µm, were measured in a Totalperm (Permtech s.r.l) instrument. The system was calibrated with a standard PET film provided by Permtech (Italy) according to the ASTM F1927-14 standard for oxygen and ASTM E96/E96M-15 standard for water. Prior to measurement, the films were conditioned for about 20 hours and subsequently tested at 30 °C and 70% relative humidity (RH) for both cases.

### Results:

The water permeability (WP) and oxygen permeability (OP) for films of two of the PLGA copolymers were measured at 30 °C and 70% RH:

### WP:

PLGA_{20/80}-7 was found to have a water permeability of 0.68 gr.mm.m⁻².day⁻¹.bar⁻¹
PLGA_{10/90}-25 was found to have a water permeability of 0.31 gr.mm.m⁻².day⁻¹.bar¹

Both copolymers exhibit better performance as barriers to moisture than both PLA (2.5 gr.mm.m⁻².day⁻¹.bar¹) and non-oriented PET (0.83 gr.mm.m⁻².day⁻¹.bar¹). While the improvement in comparison to PLA is remarkable for both copolymers, the difference with PET is more modest for PLGA_{20/80}-7 and slightly higher for PLGA_{10/90}-25.

### OP:

The measured oxygen permeability for both PLGA copolymers was below
1 mm.cm³.m⁻².day⁻¹.bar¹.

Both copolymers exhibit a significantly better performance as barriers to oxygen than both PLA (14.15 mm.cm³.m⁻².day⁻¹.bar¹) and PET (4.52 mm.cm³.m⁻².day⁻¹.bar¹).

### Example 4. Synthesis of polylactic acid (PLA) from polycondensation of lactic acid (LA)

Initially, the effect of adding a monohydric alcohol for the polycondensation of L-LA was studied using variable amounts of phenol. The polymerization set-up consisted of a 250 mL tree necked glass reactor fitted with a mechanical stirrer, a nitrogen inlet and a condenser. In a typical synthesis, lactic acid solution, 0.1 mol% of BuSnO(OH) catalyst and the required amount of the monohydric alcohol (in mole % relative to the total monomer loading) were added in a reactor conditioned in an oil bath at 190 °C. The reaction mixture was constantly stirred under nitrogen flow and atmospheric pressure for up to 23 hours. Subsequently, the temperature was increased to 200 °C and the pressure was gradually reduced (in intervals of 15 minutes) from 400 to 1 mbar and maintained at the latter pressure for 30 minutes. The products were recovered and grinded for analysis. Comparative experiments were performed without monohydric alcohol and with 1,4-dimethoxy benzene (a non-reactive solvent).

Additional experiments were later performed to study the effects of other catalysts at variable reaction temperature on the resulting molecular weight of PLA.

Table 4 presents an overview of the reaction conditions together with the resulting molecular weight distribution and the glass transition temperatures of the PLA samples synthesized in this example. The structure of all samples was found to be amorphous. The molecular weight shows an optimum in improvement of Mₙ when the reaction was carried out with up to about 10 wt % of phenol compared to the experiment carried out in absence of monohydric alcohol. Notably, three to four times the amount of the solvent 1,4 dimethoxy benzene (38 wt %) was needed to arrive at the Mₙ that was comparable to the highest Mₙ obtained with phenol (10 wt %).

Further, when comparing three catalysts using 10 mole % of phenol, it was observed that SnOct₂ showed overall better performance than BuSnO(OH) at the tested range of reaction temperatures.

**Table 4. Overview of reaction conditions, resulting molecular weight distribution and thermal characterization of PLA samples.**

| **Sample** | **MA** | **MA amount (wt%)*** | **Catalyst** | **Cat. amount (mol%)*** | **T (°C)** | **t (h)** | **Mₙ (kDa)** | **PDI** | **T_{g} (°C)** |
|---|---|---|---|---|---|---|---|---|---|
| PLA-0** | none | 0 | | | 190-200 | | 10.6 | 2.2 | 46 |
| PLA-1 | phenol | 5.2 | | | | | 15.5 | 2.1 | 50 |
| PLA-2 | phenol | 10.4 | | | | | 17.8 | 2.1 | 51 |
| PLA-3 | phenol | 26.1 | | | | | 16.0 | 2.1 | 49 |
| PLA-4 | phenol | 52.2 | | | | | 8.2 | 2.5 | 43 |
| PLA-5** | 1,4-dimethoxy benzene | 38.3 | BuSnO(OH) | | | | 20.5 | 2.2 | 50 |
| PLA-6** | 1,4-dimethoxy benzene | 15.3 | | | | 25 | 14.5 | 2.3 | 48 |
| PLA-7 | guaiacol | 13.8 | | 0.1 | | | 13.4 | 2.1 | 48 |
| PLA-8 | phenol | 10.4 | | | 200-180 | | 12.2 | 2.3 | 45 |
| PLA-9 | phenol | | | | 200-190 | | 15.1 | 2.0 | 48 |
| PLA-10 | phenol | | Sn(Oct)₂ | | 190-200 | | 16.5 | 2.7 | 48 |
| PLA-11 | phenol | | | | 200-180 | | 16.6 | 2.4 | 48 |
| PLA-12 | phenol | | | | 200-190 | | 18.2 | 2.4 | 48 |
| PLA-13 | phenol | | SnCl2 | | 190-200 | | 16.0 | 2.1 | 47 |
| PLA-14 | phenol | | | | 200-180 | | 9.2 | 2.1 | 44 |
| PLA-15 | phenol | | | | 200-190 | | 13.3 | 2.0 | 45 |
| PLA-16 | phenol | 52.2 | Sn(Oct)₂ | | 200-190 | | 8.4 | 2.0 | 39 |
| | | | | | | 26.5 | 12.8 | 2.1 | 46 |
| PLA-17 | phenol | 10.4 | BuSnO(OH) | 0.05 | 190-200 | 25 | 17.2 | 2.1 | 50 |

| | | | | | | | | | |
|---|---|---|---|---|---|---|---|---|---|
| *Relative to the total monomer load. **Comparative examples | | | | | | | | | |

### Conclusion:

Optimizing existing polymerization routes or developing new cheap and scalable methods is crucial to face the ongoing plastic transition in which PLA will continue to occupy a steady place. A polycondensation route starting from L-lactic acid and assisted by small amounts of phenol (up to 10 wt %) was found here to increase the molecular weight of PLA. The latter was improved by a factor of almost two in comparison with a typical polycondensation at equivalent conditions.

A Mₙ of 18.2 kDa and a PDI of 2.4, respectively, were reached using SnOct₂ as catalyst. Although a similar molecular weight improvement could be achieved with a non-reactive solvent, it required three to four times the amount used as compared to the case of phenol.

## Claims

1. A process for the preparation of a (co)polyester, comprising, in the presence of a catalyst, esterification of at least one monomer selected from hydroxycarboxylic acids to form oligomers, followed by polycondensation to form a (co)polymer comprising monomeric units derived from the at least one monomer,
wherein the at least one monomer is selected from α- and/or β-hydroxycarboxylic acids; and in the process also a monohydric alcohol is added in which the hydroxy group is the only reactive functional group, in an amount of 2.5-150 weight % with regard to the total weight of monomers, the alcohol having a boiling point at ambient pressure of equal to or higher than 175 °C and an acid dissociation constant (pKa) of equal to or less than 12.0 and equal to or more than 7.0.

2. The process of claim 1, wherein the monohydric alcohol is an optionally substituted phenol, preferably phenol, 4-alkylphenol, 4-alkoxyphenol, 2-alkylphenol, 2-alkoxyphenol, or any mixture thereof, and more preferably 4-methylphenol and/or 2-alkoxyphenol

3. The process of claim 1 or 2, wherein the at least one monomer selected from the group of α- and/or β-hydroxycarboxylic acids, is selected from lactic acid and glycolic acid.

4. The process of any one of claims 1 to claim 3, wherein one monomer is lactic acid and another monomer is glycolic acid, in particular 5 to 25 mole % of lactic acid and 75 to 95 mole % of glycolic acid making together a total of 100 mole %, and especially 10 mole % of lactic acid and 90 mole % of glycolic acid.

5. The process of any one of claims 1 to 4, wherein the catalyst is selected from butyl stannoic acid, tin(II) 2-ethylhexanoate, tin(II) chloride, titanium butoxide, and any combination thereof, and preferably butyl stannoic acid.

6. The process of claim 5, wherein the amount of catalyst used is selected from 0.01 to 0.1 molar equivalents with respect to the at least one monomer.

7. The process of any one of claims 1 to 6, wherein further a solvent is added at the beginning of the process or in the course of esterification.

8. A polyester (co)polymer obtainable or obtained by a process according to any one of claim 1 to 7, having a number average molecular weight, as measured by gel permeation chromatography and described in detail in the specification, of 15000 daltons or more, and a polydispersity index in the range of equal to or more than 1.7 to equal to or less than 2.5.

9. The polyester (co)polymer according to claim 8, consisting of at least 80% of monomer units derived from α- and/or β-hydroxycarboxylic acids.

10. A composition comprising a polyester (co)polymer according to claim 8 or 9 and in addition one or more additives and/or one or more additional (co)polymers.

11. An article comprising the polyester (co)polymer according to claim 8 or 9, or a composition comprising a polyester (co)polymer according to claim 10, and one or more additives and/or additional polymers.

## Patentansprüche

1. Verfahren zur Herstellung eines (Co)Polyesters, umfassend, in Gegenwart eines Katalysators, die Veresterung mindestens eines Monomers, das aus Hydroxycarbonsäuren ausgewählt ist, um Oligomere zu bilden, gefolgt von der Polykondensation, um ein (Co)Polymer zu bilden, das monomere Einheiten umfasst, die von dem mindestens einen Monomer abgeleitet sind,
wobei das mindestens eine Monomer aus α- und/oder β-Hydroxycarbonsäuren ausgewählt ist; und wobei in dem Verfahren auch ein einwertiger Alkohol zugegeben wird, in welchem die Hydroxygruppe die einzige reaktive funktionelle Gruppe ist, in einer Menge von 2,5-150 Gew.-% bezogen auf das Gesamtgewicht der Monomere, wobei der Alkohol einen Siedepunkt bei Umgebungsdruck von gleich oder höher als 175 °C und eine Säuredissoziationskonstante (pKa) von gleich oder kleiner als 12,0 und gleich oder größer als 7,0 aufweist.

2. Verfahren nach Anspruch 1, wobei der einwertige Alkohol ein optional substituiertes Phenol ist, bevorzugt Phenol, 4-Alkylphenol, 4-Alkoxyphenol, 2-Alkylphenol, 2-Alkoxyphenol oder eine beliebige Mischung davon, und noch bevorzugter 4-Methylphenol und/oder 2-Alkoxyphenol.

3. Verfahren nach Anspruch 1 oder 2, wobei das mindestens eine Monomer aus der Gruppe ausgewählt ist, die aus α- und/oder β-Hydroxycarbonsäuren, insbesondere Milchsäure und Glycolsäure besteht.

4. Verfahren nach einem der Ansprüche 1 bis 3, wobei ein Monomer Milchsäure ist, und ein weiteres Monomer Glycolsäure ist, insbesondere 5 bis 25 Mol-% Milchsäure und 75 bis 95 Mol-% Glycolsäure, die zusammen insgesamt 100 Mol-% ergeben, und insbesondere 10 Mol-% Milchsäure und 90 Mol-% Glycolsäure.

5. Verfahren nach einem der Ansprüche 1 bis 4, wobei der Katalysator aus Butylstannonsäure, Zinn(II)-2-ethylhexanoat, Zinn(II)-chlorid, Titanbutoxid und einer beliebigen Kombination davon, und bevorzugt Butylstannonsäure ausgewählt ist.

6. Verfahren nach Anspruch 5, wobei die Menge des verwendeten Katalysators aus 0,01 bis 0,1 Moläquivalenten bezogen auf das mindestens eine Monomer ausgewählt ist.

7. Verfahren nach einem der Ansprüche 1 bis 6, wobei ferner zu Beginn des Verfahrens oder im Verlauf der Veresterung ein Lösungsmittel zugegeben wird.

8. Polyester-(Co)Polymer, das durch ein Verfahren nach einem der Ansprüche 1 bis 7 erhältlich ist oder erhalten wird, mit einem zahlenmittleren Molekulargewicht, gemessen mittels Gelpermeationschromatographie und wie in der Beschreibung detailliert beschrieben, von 1500 Dalton oder mehr, und einem Polydispersitätsindex im Bereich von gleich oder größer als 1,7 bis gleich oder kleiner als 2,5.

9. Polyester-(Co)Polymer nach Anspruch 8, bestehend aus mindestens 80 % der monomeren Einheiten, die von α- und/oder β-Hydroxycarbonsäuren abgeleitet sind.

10. Zusammensetzung, umfassend ein Polyester-(Co)Polymer nach Anspruch 8 oder 9 und zusätzlich ein oder mehrere Additive und/oder ein oder mehrere (Co)Polymere.

11. Artikel, umfassend das Polyester-(Co)Polymer nach Anspruch 8 oder 9, oder eine Zusammensetzung, umfassend ein Polyester-(Co)Polymer nach Anspruch 10, und ein oder mehrere Additive und/oder zusätzliche Polymere.

## Revendications

1. Procédé de préparation d'un (co)polyester, comprenant, en présence d'un catalyseur, l'estérification d'au moins un monomère choisi parmi les acides hydroxycarboxyliques pour former des oligomères, suivie d'une polycondensation pour former un (co)polymère comprenant des motifs monomères dérivés de l'au moins un monomère,
dans lequel l'au moins un monomère est choisi parmi les acides α- et/ou β-hydroxycarboxyliques ; et, dans le procédé, un alcool monohydrique est également ajouté dans lequel le groupe hydroxy est le seul groupe fonctionnel réactif, en une quantité de 2,5 à 150 % en poids par rapport au poids total des monomères, l'alcool présentant un point d'ébullition à pression ambiante égal ou supérieur à 175°C et une constante de dissociation acide (pKa) égale ou inférieure à 12,0 et égale ou supérieure à 7,0.

2. Procédé selon la revendication 1, dans lequel l'alcool monohydrique est un phénol facultativement substitué, de préférence le phénol, le 4-alkylphénol, le 4-alkoxyphénol, le 2-alkylphénol, le 2-alkoxyphénol, ou l'un quelconque de leurs mélanges, et plus préférablement le 4-méthylphénol et/ou le 2-alkoxyphénol.

3. Procédé selon la revendication 1 ou 2, dans lequel l'au moins un monomère choisi dans le groupe des acides α- et/ou β-hydroxycarboxyliques est choisi parmi l'acide lactique et l'acide glycolique.

4. Procédé selon l'une quelconque de la revendication 1 à la revendication 3, dans lequel un monomère est l'acide lactique et un autre monomère est l'acide glycolique, en particulier 5 à 25 % en moles d'acide lactique et 75 à 95 % en moles d'acide glycolique, totalisant 100 % en moles, et en particulier 10 % en moles d'acide lactique et 90 % en moles d'acide glycolique.

5. Procédé selon l'une quelconque des revendications 1 à 4, dans lequel le catalyseur est choisi parmi l'acide butylstannoïque, le 2-éthylhexanoate d'étain(II), le chlorure d'étain(II), le butoxyde de titane et l'une quelconque de leurs combinaisons, et de préférence l'acide butylstannoïque.

6. Procédé selon la revendication 5, dans lequel la quantité de catalyseur utilisée est choisie entre 0,01 et 0,1 équivalent molaire par rapport à l'au moins un monomère.

7. Procédé selon l'une quelconque des revendications 1 à 6, dans lequel un solvant est en outre ajouté au début du procédé ou au cours de l'estérification.

8. (Co)polymère polyester pouvant être obtenu ou obtenu par un procédé selon l'une quelconque des revendications 1 à 7, présentant un poids moléculaire moyen en nombre, tel que mesuré par chromatographie par perméation de gel et décrit en détail dans la description, supérieur ou égal à 15 000 daltons, et un indice de polydispersité dans la plage égale ou supérieure à 1,7 à égale ou inférieure à 2,5.

9. (Co)polymère polyester selon la revendication 8, consistant en au moins 80 % de motifs monomères dérivés d'acides α- et/ou β-hydroxycarboxyliques.

10. Composition comprenant un (co)polymère polyester selon la revendication 8 ou 9 et, en outre, un ou plusieurs additifs et/ou un ou plusieurs (co)polymères supplémentaires.

11. Article comprenant le (co)polymère polyester selon la revendication 8 ou 9 ou une composition comprenant un (co)polymère polyester selon la revendication 10 et un ou plusieurs additifs et/ou polymères supplémentaires.
